# EUROPEAN PATENT APPLICATION

(11) **EP 4 752 702 A1**
(43) Date of publication of application: **03.06.2026**
(21) Application number: 24932021.9
(22) Date of filing: 16.12.2024
(51) Int. Cl.: G06F 3/04845, G06F 3/04847, G06T 11/60

(54) **IMAGE PROCESSING METHOD AND ELECTRONIC DEVICE**

(30) Priority: 29.03.2024 CN 202410384847
(71) Applicant: HUAWEI TECHNOLOGIES CO., LTD., Shenzhen 518129 (CN)
(72) Inventor: WANG, Chaoqun, Shenzhen, Guangdong 518129 (CN); DUAN, Xiaoxiao, Shenzhen, Guangdong 518129 (CN); CHEN, Zhen, Shenzhen, Guangdong 518129 (CN)
(74) Representative: Isarpatent
(86) International application number: PCT/CN2024/139685
(87) International publication number: WO 2025/200616

(57) **Abstract**

This application provides an image processing method and an electronic device, relating to the field of terminal technologies, to resolve a problem that processing efficiency and user experience are affected by stutter during image rendering. The method is applied to a first electronic device, and includes: displaying a first interface, where the first interface is used to display a first image; detecting a slide operation of a user on the first interface, and obtaining a first speed of the slide operation, where the slide operation is used to change an attribute of the first image; and processing the first image at a first resolution when the first speed meets a preset condition; or processing the first image at a second resolution when the first speed does not meet the preset condition, where the first resolution is different from the second resolution.

## Description

This application claims priority to Chinese Patent Application No. 202410384847.8, filed with the China National Intellectual Property Administration on March 29, 2024 and entitled "IMAGE PROCESSING METHOD AND ELECTRONIC DEVICE", which is incorporated herein by reference in its entirety.

### TECHNICAL FIELD

Embodiments of this application relate to the field of terminal technologies, and in particular, to an image processing method and an electronic device.

### BACKGROUND

With development of terminal technologies, a resolution of an image in an electronic device, for example, a mobile phone or a tablet computer, is increasingly high. High-resolution images can provide clearer and more abundant image details and real and natural colors, thereby improving visual experience.

When processing the high-resolution image, a user usually needs to adjust or edit image content to present a better display effect. However, due to an excessively high image resolution, performance of the electronic device is affected to some extent when the image content is processed, resulting in stutter during image rendering, and affecting image processing efficiency and user experience.

### SUMMARY

This application provides an image processing method and an electronic device, so that a resolution during image processing can be adaptively adjusted based on a speed at which a user adjusts an image attribute. In this way, image details can be fine-tuned, and an overall change trend of an image can also be observed, to meet different requirements of the user for image processing, and improve image processing efficiency and user experience.

To achieve the foregoing objectives, this application uses the following technical solutions.

According to a first aspect, this application provides an image processing method, which is applied to an electronic device. The method includes: displaying a first interface, where the first interface is used to display a first image; detecting a slide operation of a user on the first interface, and obtaining a first speed of the slide operation, where the slide operation is used to change an attribute of the first image; and processing the first image at a first resolution when the first speed meets a preset condition; or processing the first image at a second resolution when the first speed does not meet the preset condition, where the first resolution is different from the second resolution.

In this application, when detecting that the user adjusts an image attribute, the electronic device adaptively selects, based on a slide speed of the user, a processing manner to process the image. When the user slowly slides, the image is processed at the first resolution, to display image details in real time, and enrich a detail display effect, thereby improving controllability of the user on the image details, and improving user experience. When the user quickly slides, the image is processed at the second resolution less than the first resolution, to truly, quickly, and smoothly display an image change effect, thereby reducing a data amount, improving an image frame rate and a processing effect without stutter, and improving user experience.

In some embodiments, the first image may be an image shot by the user by using the electronic device, the first image may be an image drawn by the user on the electronic device, the first image may be an image obtained by the user via a network or by using an external storage device, the first image may be an image captured by the user when browsing a video, a document, or the like, or the first image may be an image stored in the electronic device. The first image may be an image whose resolution is greater than or equal to a preset threshold, or the first image may be an image whose resolution is less than the preset threshold. The first image may be an entire image that is not scaled up or scaled down, may be a scaled-up local image, or may be a scaled-down image.

According to the first aspect or any one of the foregoing implementations of the first aspect, the first resolution is a resolution of the first image, and the second resolution is less than the first resolution.

In some embodiments, the first resolution is a resolution of an image currently displayed by the electronic device, and the second resolution is less than the resolution of the image currently displayed by the electronic device.

In this application, a resolution present during image processing is determined based on the resolution of the currently displayed image. When the electronic device subsequently processes the image at the first resolution, more and richer image details can be retained, to improve an image display effect, so that the user can observe clearer and realer image content. When the electronic device subsequently processes the image at the second resolution, computing resources can be saved, a processing speed can be accelerated, and image processing efficiency can be improved, so that the change effect of the image can be truly, quickly, and smoothly displayed for the user.

According to the first aspect or any one of the foregoing implementations of the first aspect, the preset condition includes the slide speed being less than a preset speed, and the preset speed is a predetermined minimum threshold for the user to quickly adjust the image attribute. Processing the first image at the first resolution when the first speed meets the preset condition includes: when the first speed is less than the preset speed, determining that an intention of the user is to slowly adjust the image attribute, and processing the first image at the first resolution.

In some embodiments, the electronic device provides an interactive control, for example, a slide control, to help the user adjust the image attribute. The user changes the image attribute by moving the slide control leftward or rightward.

In this application, the electronic device determines an adjustment intention of the user based on the first speed. When the intention of the user is to slowly adjust the image, the image is processed at the first resolution, so that details and changes can be captured more accurately, to meet a requirement of the user for fine-tuning of the image attribute, and improve controllability of the user on local details.

According to the first aspect or any one of the foregoing implementations of the first aspect, the preset condition includes the slide speed being less than a preset speed, and the preset speed is a predetermined minimum threshold for the user to quickly adjust the image attribute. Processing the first image at the second resolution when the first speed does not meet the preset condition includes: when the first speed is greater than or equal to the preset speed, determining that an intention of the user is to quickly adjust the image attribute, and processing the first image at the second resolution.

In this application, the electronic device determines an adjustment intention of the user based on the first speed. When the intention of the user is to quickly adjust the image, the image is processed at the second resolution, so that system performance can be improved, and the image frame rate and the image processing efficiency can be improved. In addition, a response can be quickly made, an image change trend can be truly and smoothly displayed without stutter, thereby improving viewing experience of the user.

According to the first aspect or any one of the foregoing implementations of the first aspect, processing the first image at the second resolution when the first speed does not meet the preset condition includes: obtaining a preset rule when the first speed does not meet the preset condition; determining the second resolution based on the preset rule and the first resolution; and processing the first image at the second resolution.

According to the first aspect or any one of the foregoing implementations of the first aspect, the preset rule is to process the first resolution based on a preset ratio to obtain the second resolution, and the preset ratio is a value greater than 0 and less than 1.

According to the first aspect or any one of the foregoing implementations of the first aspect, obtaining the first speed of the slide operation includes: determining the first speed based on a slide distance in a unit time; determining the first speed based on a quantity of pixels traversed in a unit time; or determining the first speed based on a slide distance and a slide time.

In some embodiments, the electronic device obtains a start position at which the user slides and a moving position in the unit time, and obtains the first speed through calculation based on the start position, the moving position, and the unit time.

In some other embodiments, the electronic device obtains a start position at which the user slides and a moving position in the unit time, determines a slide distance based on the start position and the moving position, determines, based on the slide distance and pixel density, the quantity of pixels traversed in the unit time, and obtains the first speed through calculation based on the quantity of pixels traversed in the unit time and the unit time.

In this application, the electronic device may accurately adjust an image processing manner at each moment based on a moving speed at each moment, to make an image processing procedure more flexible and accurate, so that the user accurately observes an adjustment effect at each moment, thereby improving user experience.

In some other embodiments, the electronic device obtains a start position at which the user slides, an end position, and a slide time, determines the slide distance based on the start position and the end position, and determines the first speed based on the slide distance and the slide time.

In this application, the electronic device may perform smoothing processing based on an overall situation present during the slide operation of the user, to reduce sudden changes and fluctuation, making the processing effect more stable.

According to the first aspect or any one of the foregoing implementations of the first aspect, the attribute of the first image includes: contrast, brightness, saturation, hue, color balance, blurriness, sharpness, exposure, color temperature, highlight, and shadow.

In this application, the electronic device may adjust the image attribute to optimize a visual effect.

According to a second aspect, this application provides an image processing apparatus. The image processing apparatus includes a processor and a memory. The memory is coupled to the processor, and the memory is configured to store computer-readable instructions. When the processor reads the computer-readable instructions from the memory, the image processing apparatus is enabled to perform the method according to the first aspect and any one of the implementations of the first aspect.

According to a third aspect, this application provides an image processing system. The image processing system includes a processor and a memory. The memory is coupled to the processor, and the memory is configured to store computer-readable instructions. When the processor reads the computer-readable instructions from the memory, the image processing system is enabled to perform the method according to the first aspect and any one of the implementations of the first aspect.

According to a fourth aspect, this application provides an electronic device. The electronic device includes a processor and a memory. The memory is coupled to the processor, the memory is configured to store computer program code, and the computer program code includes computer instructions. When the processor reads the computer instructions from the memory, the electronic device is enabled to perform the method according to the first aspect and any one of the implementations of the first aspect.

According to a fifth aspect, this application provides a chip system. The chip system includes at least one processor and at least one interface circuit. The at least one interface circuit is configured to: perform a transceiver function, and send instructions to the at least one processor. The at least one processor executes the instructions, and the at least one processor performs the method according to the first aspect and any one of the implementations of the first aspect.

According to a sixth aspect, this application provides a computer-readable storage medium. The computer-readable storage medium includes a computer program or instructions. When the computer program is run on a computer or the instructions are run on the computer, the computer is enabled to perform the method according to the first aspect and any one of the implementations of the first aspect.

According to a seventh aspect, this application provides a computer program product. The computer program product includes a computer program or instructions. When the computer program is run on a computer or the instructions are run on the computer, the computer is enabled to perform the method according to the first aspect and any one of the implementations of the first aspect.

For technical effects corresponding to any one of the second aspect to the seventh aspect and the implementations of the second aspect to the seventh aspect, refer to the technical effects corresponding to the first aspect and any one of the implementations of the first aspect. Details are not described herein again.

### BRIEF DESCRIPTION OF DRAWINGS

FIG. 1 is a diagram 1 of an image editing interface according to an embodiment of this application;
FIG. 2 is a diagram 2 of an image editing interface according to an embodiment of this application;
FIG. 3 is a diagram 3 of an image editing interface according to an embodiment of this application;
FIG. 4 is a diagram of a structure of an electronic device according to an embodiment of this application;
FIG. 5 is a diagram of an architecture of an image processing system according to an embodiment of this application;
FIG. 6 is a schematic flowchart 1 of an image processing method according to an embodiment of this application;
FIG. 7 is a diagram of an image processing result according to an embodiment of this application;
FIG. 8 is a schematic flowchart 2 of an image processing method according to an embodiment of this application;
FIG. 9 is a diagram of a structure of an image processing apparatus according to an embodiment of this application; and
FIG. 10 is a diagram of a structure of a chip system according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are merely intended to describe specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or at least two (including two).

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner. The term "connect" includes a direct connection and an indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like indicates giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

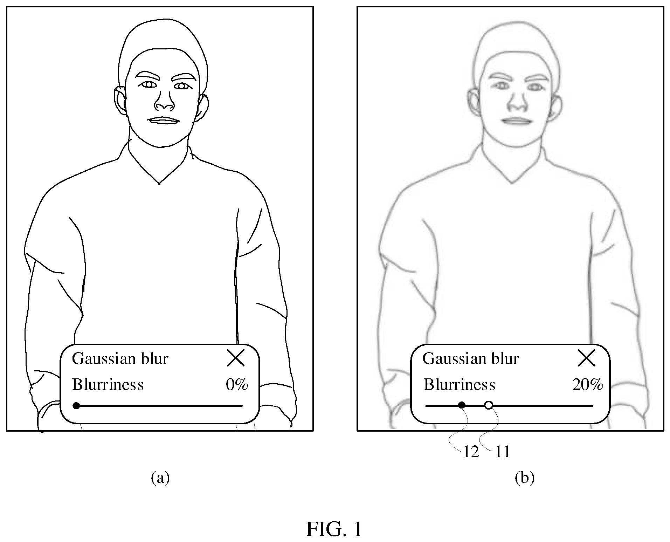

In some examples, when a user adjusts or edits image content, an interactive control is usually used to adjust the image content. For example, the user adjusts blurriness of an image. As shown in FIG. 1, the user adjusts a blurriness value through a slide bar (the slide bar may be displayed in the image content, or may be hidden). In response to a user operation (for example, moving a slide control leftward or rightward to change the blurriness value), an electronic device performs blur processing (for example, Gaussian blur) on the image based on the blurriness value adjusted by the user. (a) in FIG. 1 shows a high-resolution image whose blurriness has not been adjusted. When the user adjusts the blurriness, due to an excessively high image resolution, the electronic device needs to process a large data amount, which affects system performance, resulting in problems such as stutter during image rendering and asynchrony between the user operation and interface-displayed content. As shown in (b) in FIG. 1, the user touches a display of the electronic device with a finger, and the finger slides from left to right to a touch point 11. However, due to insufficient performance of the electronic device, the slide control moves to only a position 12, and the slide control is actually displayed asynchronously with the user operation, resulting in an unsmooth user operation and poor visual experience, which greatly affects user experience. In addition, the insufficient performance of the electronic device also results in the stutter during image rendering and a decrease in a frame rate (frames per second, FPS) (for example, to less than 55 FPS). In other words, image processing efficiency is affected, and image display smoothness and viewing experience of the user are also affected.

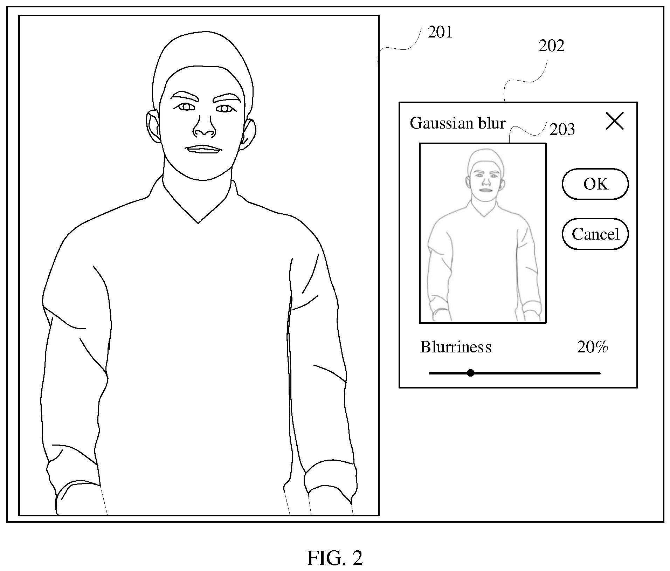

In some other examples, when the electronic device processes a high-resolution image, the high-resolution image is correspondingly adjusted based on an adjustment result of a low-resolution image by reducing a resolution. Specifically, the electronic device displays, in a small window, the low-resolution image corresponding to the high-resolution image, so that the user adjusts the low-resolution image and previews an adjustment effect in the small window. In response to a user operation, the electronic device displays the adjustment result of the low-resolution image in the small window. The electronic device correspondingly adjusts the high-resolution image based on the user-confirmed adjustment result of the low-resolution image. For example, the user adjusts the blurriness of the image. As shown in FIG. 2, a high-resolution image is displayed in a window 201, a preview box 203 in the window 202 displays a low-resolution image corresponding to the high-resolution image, and the window 202 further includes a functional control, for example, a slide bar, an OK control, and a Cancel control. When the user performs blur processing on the high-resolution image, the electronic device adds the window 202, and displays the low-resolution image in the preview box 203. The user may adjust blurriness of the low-resolution image and preview the adjustment result of the low-resolution image in the window 202. If the user is satisfied with the current adjustment result in the window 202, the user may tap the OK control in the window 202. In response to a confirmation operation of the user, the electronic device processes the high-resolution image in a high-resolution processing manner based on the adjustment result of the low-resolution image (for example, a blurriness value of the current low-resolution image).

It may be understood that, in the foregoing example, an image processing effect is previewed by reducing the resolution, but during actual image processing, a high resolution is still used for image processing.

In the foregoing example, when the high-resolution image is processed by reducing the resolution, a low-resolution image processing effect cannot truly reflect a high-resolution image processing effect. In addition, an operation is complex. The user needs to adjust the low-resolution image in the small window. After the user taps the OK control, the electronic device can correspondingly adjust the high-resolution image based on the user-confirmed adjustment result of the low-resolution image. Operation steps are increased, and an operation procedure is complex, resulting in unfriendly interaction experience.

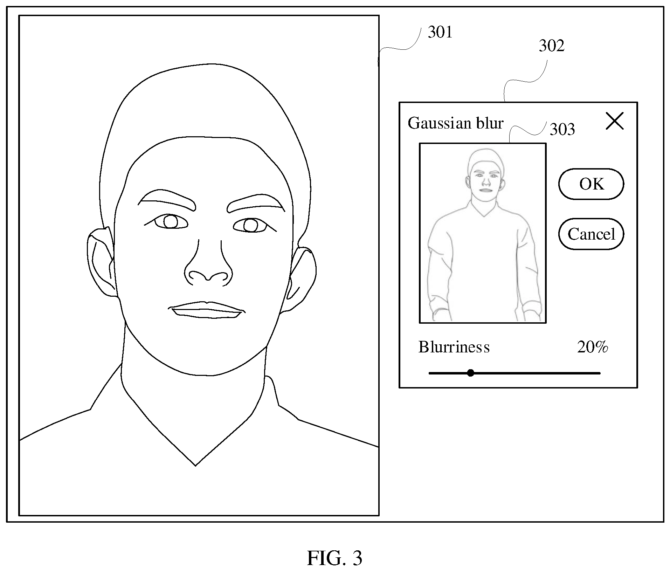

Moreover, in the foregoing adjustment manner, only an entire image can be adjusted, but local details of the image cannot be adjusted or observed. Specifically, a size of the small-window preview box remains unchanged. Even if the user scales up the high-resolution image to view the local details, the low-resolution image displayed in the preview box can only be the entire image, and the preview box cannot display a low-resolution image corresponding to a scaled-up part of the high-resolution image. For example, as shown in FIG. 3, a window 301 displays a high-resolution head image that is scaled up by the user, and a preview box 303 in the window 302 stills displays an image corresponding to the entire high-resolution image rather than a low-resolution image corresponding to the head image.

To resolve the foregoing technical problems, an embodiment of this application provides an image processing method. The method includes: An electronic device obtains a first speed, where the first speed is a slide speed at which a user adjusts an image attribute. The electronic device determines an intention of the user based on the first speed. The electronic device processes an image at a first resolution when the intention of the user is a first intention, or processes the image at a second resolution when the intention of the user is a second intention, where the first resolution is different from the second resolution. In the technical solutions of this application, the electronic device analyzes the intention of the user based on the slide speed at which the user adjusts the image attribute, and automatically selects an appropriate resolution based on the intention of the user to process the image. In this way, image details can be fine-tuned, and an overall change trend of the image can also be observed, to meet different requirements of the user for image processing, optimize an image processing procedure, and improve image processing efficiency, thereby providing smoother and more intelligent image processing experience for the user.

The following describes the technical solutions in embodiments of this application with reference to the accompanying drawings in embodiments of this application. It is clear that the described embodiments are merely a part rather than all of embodiments of this application.

An image processing method provided in embodiments of this application may be applied to an electronic device with a display. The electronic device may also be referred to as a terminal device (terminal equipment), a terminal (terminal), user equipment (user equipment, UE), a mobile station (mobile station, MS), a mobile terminal (mobile terminal, MT), or the like.

For example, the electronic device in embodiments of this application may be a mobile phone, a tablet computer, a desktop computer, a laptop computer, a handheld computer, a notebook computer, a smart drawing board, a smart television, an ultra-mobile personal computer (ultra-mobile personal computer, UMPC), a netbook, a personal computer (personal computer, PC), a personal digital assistant (personal digital assistant, PDA) device, and the like. A specific form of the electronic device is not specially limited in embodiments of this application.

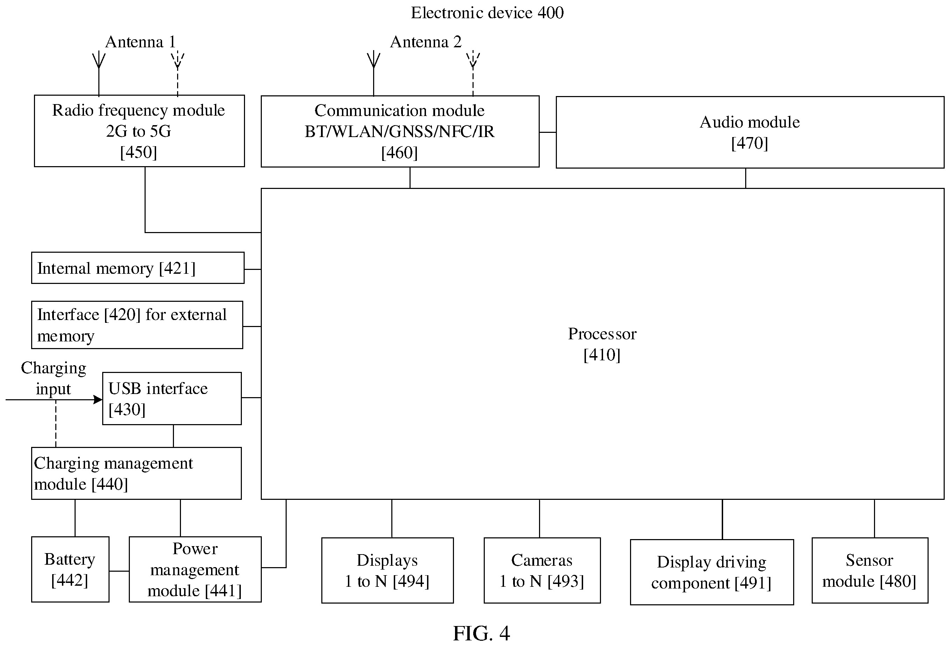

For example, FIG. 4 is a diagram of a hardware structure of an electronic device 400. The electronic device 400 may include a processor 410, an interface 420 for external memory, an internal memory 421, a universal serial bus (universal serial bus, USB) interface 430, a charging management module 440, a power management module 441, a battery 442, an antenna 1, an antenna 2, a radio frequency module 450, a communication module 460, an audio module 470, a sensor module 480, a display driving component 491, a camera 493, a display 494, and the like.

The structure shown in this embodiment of the present invention does not constitute a limitation on the electronic device 400. The electronic device 400 may include more or fewer components than those shown in the figure, some components may be combined, some components may be split, or there may be different component arrangements. The components shown in the figure may be implemented by hardware, software, or a combination of software and hardware.

The processor 410 may include one or more processing units. For example, the processor 410 may include an application processor (application processor, AP), a system on chip (system on chip, SoC), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 400. The controller may generate an operation control signal based on an instruction operation code and a time sequence signal, to complete control of instruction fetching and instruction execution.

A memory may be disposed in the processor 410, and is configured to store instructions and data. In some embodiments, the memory in the processor is a cache, and may store instructions or data that has been used or cyclically used by the processor. If the processor needs to use the instructions or the data again, the processor may directly invoke the instructions or the data from the memory. This avoids repeated access and reduces a waiting time of the processor, thereby improving system efficiency.

In some embodiments, the processor 410 may include one or more interfaces. The interface may include an inter-integrated circuit (inter-integrated circuit, I2C) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 410 to a peripheral component, for example, the display 494 or the camera 493. The MIPI interface includes a camera serial interface (camera serial interface, CSI), a display serial interface (display serial interface, DSI), and the like. In some embodiments, the processor 410 communicates with the camera 493 through the CSI interface, to implement a photographing function of the electronic device 400. The processor 410 communicates with the display 494 through the DSI interface, to implement a display function of the electronic device 400.

The interface 420 for external memory may be configured to connect to an external memory card, for example, a micro SD card, to extend a storage capability of the electronic device 400. The external memory card communicates with the processor through the interface for external memory, to implement a data storage function. For example, files such as music and videos are stored in the external memory card.

The internal memory 421 may be configured to store computer-executable program code. The computer-executable program code includes instructions. The processor 410 runs the instructions stored in the internal memory 421, to perform various functional applications of the electronic device 400 and data processing. The memory 421 may include a program storage area and a data storage area. The program storage area may store an operating system, an application required by at least one function, and the like. The data storage area may store data created during use of the electronic device 400 and the like. In addition, the memory 421 may include a highspeed random access memory, and may further include a non-volatile memory, for example, at least one magnetic disk storage component, a flash memory component, another volatile solid-state storage component, or a universal flash storage (universal flash storage, UFS).

The USB interface 430 is an interface that conforms to a USB standard specification, and may be specifically a mini USB interface, a micro USB interface, a USB type-C interface, or the like. The USB interface may be configured to connect to a charger to charge the electronic device 400, may be configured to perform data transmission between the electronic device 400 and a peripheral device, or may be configured to connect to a headset for playing audio through the headset. The interface may be further configured to connect to another electronic device, for example, an AR device.

It may be understood that an interface connection relationship between the modules shown in this embodiment of this application is merely an example for description, and does not constitute a limitation on the structure of the electronic device 400. In some other embodiments of this application, the electronic device 400 may alternatively use an interface connection manner different from that in the foregoing embodiment, or use a combination of a plurality of interface connection manners.

The charging management module 440 is configured to receive charging input from a charger. The charger may be a wireless charger or a wired charger. In some embodiments of wired charging, the charging management module 440 may receive charging input from the wired charger through the USB interface 430. In some embodiments of wireless charging, the charging management module 440 may receive wireless charging input through a wireless charging coil of the electronic device 400. When charging the battery 442, the charging management module 440 may further supply power to the electronic device through the power management module 441.

The power management module 441 is configured to connect to the battery 442, the charging management module 440, and the processor 410. The power management module receives input of the battery and/or the charging management module, and supplies power to the processor, the internal memory, the external memory, the display, and the like. The power management module may be further configured to monitor parameters such as a battery capacity and a battery health status (electric leakage and impedance). In some other embodiments, the power management module 441 may alternatively be disposed in the processor 410. In some other embodiments, the power management module 441 and the charging management module 440 may alternatively be disposed in a same component.

A wireless communication function of the electronic device 400 may be implemented through the antenna 1, the antenna 2, the radio frequency module 450, the communication module 460, the modem processor, the baseband processor, and the like.

The antenna 1 and the antenna 2 are configured to: transmit and receive an electromagnetic wave signal. Each antenna in the electronic device 400 may be configured to cover one or more communication frequency bands. Different antennas may be further reused, to improve antenna utilization. For example, a cellular network antenna may be reused as a diversity antenna of a wireless local area network. In some embodiments, the antenna may be used in combination with a tuning switch.

The radio frequency module 450 may provide a communication processing module that is for a wireless communication solution applied to the electronic device 400 and including 2G to 5G and the like. The radio frequency module 450 may include at least one filter, a switch, a power amplifier, a low noise amplifier (low noise amplifier, LNA), and the like. The radio frequency module 450 may receive an electromagnetic wave through the antenna 1, perform processing such as filtering and amplification on the received electromagnetic wave, and transmit a processed electromagnetic wave to the modem processor for demodulation. The radio frequency module 450 may further amplify a signal modulated by the modem processor, and convert the signal into an electromagnetic wave for radiation through the antenna 1. In some embodiments, at least a part of functional modules of the radio frequency module 450 may be disposed in the processor 410. In some embodiments, at least a part of functional modules of the radio frequency module 450 may be disposed in a same component as at least a part of modules of the processor 410.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then is transmitted to the application processor. The application processor displays an image or a video through the display 494. In some embodiments, the modem processor may be an independent component. In some other embodiments, the modem processor may be independent of the processor 410, and is disposed in a same component as the radio frequency module 450 or another functional module.

The communication module 460 may provide a communication processing module that is for a wireless communication solution applied to the electronic device 400 and including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field wireless communication (near field communication, NFC) technology, an infrared (infrared, IR) technology, or the like. The communication module 460 may be one or more components integrating at least one communication processing module. The communication module receives an electromagnetic wave through the antenna 2, performs frequency modulation and filtering processing on an electromagnetic wave signal, and sends a processed signal to the processor. The communication module 460 may further receive a to-be-sent signal from the processor 410, perform frequency modulation and amplification on the signal, and convert the signal into an electromagnetic wave for radiation through the antenna 2.

In some embodiments, in the electronic device 400, the antenna 1 is coupled to the radio frequency module, and the antenna 2 is coupled to the communication module, so that the electronic device 400 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, an IR technology, and/or the like. The GNSS may include a global positioning system (global positioning system, GPS), a global navigation satellite system (global navigation satellite system, GLONASS) and/or a BeiDou navigation satellite system (BeiDou navigation satellite system, BDS), a quasi-zenith satellite system (quasi-zenith satellite system, QZSS) and/or a satellite based augmentation system (satellite based augmentation system, SBAS), and the like.

The audio module 470 is configured to convert digital audio information into an analog audio signal for output, and is also configured to convert analog audio input into a digital audio signal. The audio module may be further configured to: encode and decode an audio signal.

The sensor module 480 of the electronic device 400 may specifically include a gyroscope sensor, an acceleration sensor, a pressure sensor, a barometric pressure sensor, a magnetic sensor, a distance sensor, an optical proximity sensor, a fingerprint sensor, a temperature sensor, a touch sensor, an ambient light sensor, a bone conduction sensor, and the like.

The display driving component 491 is a control center of the display 494, and may control the display 494 to display various image data. For example, the display driving component 491 may be a chip with a memory. For example, the display driving component 491 may be a display driving chip. A function of the display driving chip is to provide information of various display pictures for the display 494 after power-on.

The camera 493 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. In some embodiments, the electronic device 400 may include one or N cameras, where N is a positive integer greater than 1.

The electronic device 400 implements the display function through the graphics processing unit (graphics processing unit, GPU), the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

The display 494 is configured to display an image, a video, and the like. The display includes a display panel. The display panel may be an LCD (liquid crystal display, liquid crystal display), an OLED (organic light-emitting diode, organic light-emitting diode), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 400 may include one or N displays, where N is a positive integer greater than 1.

The electronic device 400 may further include components such as the battery 442. This is not limited in embodiments of this application.

The following uses an example in which the electronic device is a mobile phone for description. The following describes in detail the display control method in embodiments of this application by using specific embodiments and accompanying drawings. The following embodiments may be combined with each other, and same or similar concepts or processes may not be repeatedly described in some embodiments.

The image processing method in embodiments of this application may be applied to any image processing scenario, for example, a painting creation scenario, an image editing scenario, a medical image processing scenario, and a digital art scenario. The image processing scenario is not limited in embodiments of this application.

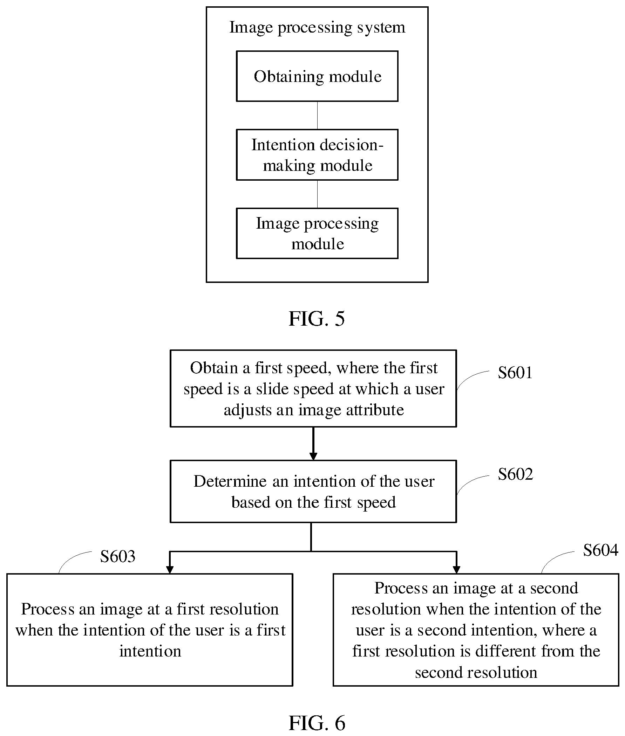

FIG. 5 is a diagram of an image processing system according to an embodiment of this application. The image processing system includes an obtaining module, an intention decision-making module, and an image processing module. The obtaining module, the intention decision-making module, and the image processing module are connected to and communicate with each other.

The obtaining module is configured to obtain a first speed. The first speed is a slide speed at which a user adjusts an image attribute. The obtaining module is further configured to send the first speed to the intention decision-making module.

The intention decision-making module is configured to determine an intention of the user based on the first speed. The intention decision-making module is further configured to send the intention of the user to the image processing module. The intention of the user includes a first intention and a second intention. The first intention indicates that the user slowly slides, and indicates that the user desires to slowly adjust the image. The second intention indicates that the user quickly slides, and indicates that the user desires to quickly adjust the image.

The image processing module is configured to process the image at a first resolution when the intention of the user is the first intention. The image processing module is further configured to process the image at a second resolution when the intention of the user is the second intention. The first resolution is different from the second resolution. For example, the first resolution is a high resolution, and the second resolution is a low resolution.

It may be understood that the diagram of the system architecture shown in FIG. 5 is merely an example. During actual application, the image processing system may include more or fewer modules. Module division in the image processing system is not limited in embodiments of this application. For example, the intention decision-making module and the image processing module may be integrated into one module. For another example, the image processing module may include a resolution determining unit and an image processing unit. Specifically, the resolution processing unit is configured to determine a resolution corresponding to the intention of the user, and the resolution processing unit is further configured to send the resolution corresponding to the intention of the user to the image processing unit. The image processing unit is configured to process the image based on the resolution corresponding to the intention of the user.

It may be understood that, in the foregoing example, modules in the image processing system are independent components, and the modules exchange data to complete image processing. During actual application, a plurality of modules in the image processing system may be deployed on a same component to jointly implement image processing.

The modules in the image processing system are divided according to functional logic, and may alternatively be divided in another manner in practice. In addition, the foregoing modules may have other names. Moreover, each module may be implemented by hardware, may be implemented by software, or may be implemented by a combination of hardware and software. Specifically, that a specific module is implemented by the hardware, the software, or the combination of the software and the hardware depends on specific applications and design constraints of the technical solutions. Different modules may be implemented by different hardware, or a plurality of modules may be implemented by same hardware. This is not specifically limited in embodiments of this application.

It may be understood that the system architecture and the service scenario described in this application are intended to describe the technical solutions in this application more clearly, and do not constitute a unique limitation on the technical solutions provided in this application. A person of ordinary skill in the art may learn that, with evolution of the system architecture and emergence of new service scenarios, the technical solutions provided in this application are also applicable to similar technical problems.

FIG. 6 is a schematic flowchart of an image processing method according to an embodiment of this application. It should be noted that the method is not limited to a specific sequence described in FIG. 6 and below. It should be understood that, in another embodiment, a sequence of a part of steps in the method may be exchanged according to an actual requirement, or a part of steps in the method may be omitted or deleted. The method includes the following steps.

S601: An electronic device obtains a first speed, where the first speed is a slide speed at which a user adjusts an image attribute.

In this embodiment of this application, the electronic device is an electronic device with an image processing function. For example, the electronic device includes an application (application, APP) that implements image display and editing functions, and the user may display, edit, or adjust an image by using the application.

It may be understood that the application that implements the image editing function may be a system application and/or a third-party application that are/is provided by a system of the electronic device. The system application and/or the third-party application are/is an application related to image processing. The system application may also be referred to as an embedded application. The embedded application is an application used for the electronic device to implement the image processing function. The third-party application may also be referred to as a downloadable application. The downloadable application is an application that can provide an internet protocol multimedia subsystem (internet protocol multimedia subsystem, IMS) connection of the downloadable application. The downloadable application may be an application pre-installed on the electronic device, or may be an application downloaded and installed by the user on the electronic device.

In this embodiment of this application, the image adjusted by the user may be a high-resolution image, or may be a low-resolution image. A display interface of the electronic device may display an entire image that is not scaled up or scaled down, a scaled-up local image, or a scaled-down image.

The high-resolution image is an image whose resolution is greater than or equal to a preset threshold, and the low-resolution image is an image whose resolution is less than the preset threshold.

The preset threshold is a resolution preset by the electronic device, and is used to classify images into a high-resolution image and a low-resolution image. The preset threshold is determined based on a performance parameter, an application requirement, and the like of the electronic device. It may be understood that different electronic devices have different preset thresholds for distinguishing between the high-resolution image and the low-resolution image.

For example, the resolution of the image is usually represented by a quantity of horizontal pixels and a quantity of vertical pixels. The preset threshold may be 1024* 1024. The electronic device determines an image whose resolution is greater than or equal to 1024* 1024 as a high-resolution image, and determines an image whose resolution is less than 1024*1024 as a low-resolution image. For example, an image with a resolution of 1920*1080 is a high-resolution image, and an image with a resolution of 1024*768 is a low-resolution image.

In this embodiment of this application, the first speed is a slide speed at which the user adjusts the image attribute on the display interface of the electronic device.

In some embodiments, the electronic device provides an interactive control to help the user adjust the image attribute. For example, the electronic device includes a slide control, and the first speed is a speed at which the user slides the slide control.

For example, for the slide bar shown in FIG. 1, the electronic device provides the slide bar, and the user may change the image attribute by moving a slide control in the slide bar leftward or rightward.

It may be understood that the slide bar provided by the electronic device may be displayed on the user interface in a visible state, or may be hidden in an invisible state. Based on the example described in (a) in FIG. 1, the slide bar is displayed on the display interface, and the user may adjust the image attribute through the displayed slide bar. When the slide bar is hidden in the invisible state, a Gaussian blur window shown in (a) in FIG. 1 is not displayed, and the electronic device displays only the image. The user may slide near the undisplayed slide bar, and the electronic device does not display the slide bar, and displays only a changed value.

In this embodiment of this application, the image attribute is a parameter for describing a characteristic and a feature of the image. The image attribute includes but is not limited to attributes such as contrast, brightness, saturation, hue, color balance, blurriness, sharpness, exposure, color temperature, highlight, and shadow.

In some embodiments, when the user adjusts the image, the electronic device provides the slide bar, so that the user adjusts a specific value of the image attribute, and the electronic device determines the first speed based on a slide operation of the user.

In a possible implementation, the electronic device determines the first speed based on a slide distance in a unit time. For example, the electronic device obtains a start position at which the user slides (for example, coordinates corresponding to the start position are A (x1, y1)) and a moving position in the unit time (for example, coordinates corresponding to the moving position are B (x2, y2)), and obtains, through calculation based on the start position, the moving position, and the unit time (for example, t1), the first speed (for example, dist(A, B)/t1, where dist() is a distance formula).

For example, if the unit time is 1 millisecond (millisecond, ms), and the moving distance is in a unit of inch (inch), the first speed should be in a unit of (inch/ms).

In another possible implementation, the electronic device determines the first speed based on a quantity of pixels traversed in a unit time. For example, the electronic device obtains a start position at which the user slides (for example, coordinates corresponding to the start position are A (x1, y1)) and a moving position in the unit time (for example, coordinates corresponding to the moving position are B (x2, y2)), determines a slide distance (for example, dist(A, B)) based on the start position and the moving position, determines, based on the slide distance and pixel density (for example, p), the quantity of pixels (for example, dist(A, B)*p) traversed in the unit time, and obtains, through calculation based on the quantity of pixels traversed in the unit time and the unit time (for example, t1), the first speed (for example, dist(A, B)*p/t1).

It may be understood that the pixel density (pixel density) refers to a quantity of physical pixels included in each inch of a display device (for example, a mobile phone or a computer display). Higher pixel density may indicate a clearer and more delicate image displayed on a screen.

For example, if a pixel is in a unit of pixel (pixel), and the unit time is 1 millisecond, the first speed should be in a unit of (pixel/ms).

In the foregoing possible implementations, the first speed is an instantaneous speed, and may reflect a moving speed of the user at each moment, so that the electronic device accurately adjusts an image processing manner at each moment based on the moving speed at each moment, to make an image processing procedure more flexible and accurate. In addition, a real-time response may be made based on a real-time slide speed of the user, and a real-time change may be made in a slide process of the user, so that the user accurately observes an adjustment effect at each moment, thereby improving user experience.

It may be understood that, in the foregoing possible implementations, the first speed is the instantaneous speed, and the electronic device needs to collect, at each moment, the first speed at which the user slides, until the user stops sliding.

In another possible implementation, the electronic device determines the first speed based on a slide distance and a slide time. For example, the electronic device obtains a start position at which the user slides (for example, coordinates corresponding to the start position are A (x1, y1)), an end position (for example, coordinates corresponding to the end position are C (x3, y3)), and a slide time (for example, t2), determines the slide distance based on the start position and the end position, and determines the first speed (for example, dist(A, C)/t2) based on the slide distance and the slide time.

In the foregoing possible implementation, the first speed is an average speed, and may reflect an overall situation present when the user moves the slide control. Smoothing processing is performed based on the overall situation, to reduce sudden changes and fluctuation, making a processing effect more stable.

It may be understood that a manner of obtaining the first speed is not limited in embodiments of this application.

S602: The electronic device determines an intention of the user based on the first speed.

In this embodiment of this application, the intention of the user is an objective present when the user adjusts the image attribute. The intention of the user includes a first intention and a second intention. The first intention indicates that the user slowly slides, and indicates that the user desires to slowly adjust the image. The second intention indicates that the user quickly slides, and indicates that the user desires to quickly adjust the image.

It may be understood that the first intention indicates that the user desires to make a detailed adjustment to the image attribute and slowly preview adjustment details of the image. The second intention indicates that the user desires to quickly change the image attribute, and quickly preview an overall change effect and change trend of the image.

In some embodiments, when the first speed is less than a preset speed, the electronic device determines that the intention of the user is the first intention.

In some other embodiments, when the first speed is greater than or equal to the preset speed, the electronic device determines that the intention of the user is the second intention.

The preset speed is a predetermined minimum threshold for the user to quickly adjust the image attribute.

For example, the preset speed stored in the electronic device is V, and the first speed obtained by the electronic device is S. If S is less than V, the electronic device determines that the intention of the user is the first intention, that is, slowly adjusting the image, and the user desires to carefully observe or adjust image details. If S is greater than or equal to V, the electronic device determines that the intention of the user is the second intention, that is, quickly adjusting the image, and the user desires to view the overall change trend or change effect of the image.

S603: The electronic device processes the image at a first resolution when the intention of the user is the first intention.

In this embodiment of this application, the first resolution is a resolution of an image currently displayed by the electronic device. The first resolution is a resolution that should be used when the electronic device processes the image when the intention of the user is the first intention. The first resolution may be understood as a full resolution of the currently displayed image.

For example, based on the example in step S601, when the intention of the user is the first intention, and the resolution of the image is 1920* 1080, it is determined that the first resolution is 1920* 1080. For another example, when the intention of the user is the first intention, and the resolution of the image is 1024*768, it is determined that the first resolution is 1024*768.

It may be understood that the resolution is an inherent attribute of the image, and scaling up or down the image does not change the resolution of the image.

In this embodiment of this application, the electronic device stores a correspondence between the intention of the user and the resolution. When the intention of the user is the first intention, the electronic device determines, based on the correspondence, the first resolution corresponding to a slow adjustment, and the electronic device processes the image at the first resolution.

For example, Table 1 shows the correspondence between the intention of the user and the resolution provided in this embodiment of this application.

**Table 1**

| Intention of a user | Resolution |
|---|---|
| First intention | First resolution |
| Second intention | Second resolution |

It may be understood that, when the intention of the user is the first intention, the user desires to slowly adjust or observe the image details. To meet this requirement of the user, the electronic device processes the image based on the resolution of the image, to improve detail quality of the image and controllability of the user on the image details, help the user adjust the image details, and improve user experience.

For example, when the intention of the user is the first intention, the electronic device processes the image at the resolution of the image. For example, the electronic device currently displays an entire image that is not scaled up or scaled down, and the electronic device processes the entire image at the resolution of the image. For another example, the electronic device currently displays a scaled-up or scaled-down local image, and the electronic device processes, at the resolution of the image, an original image (namely, the entire image) that is not scaled up or scaled down, to obtain a first processed image. The electronic device processes the first processed image based on a status (for example, a scale-up ratio or a scale-down ratio) of the currently displayed image, to obtain a second processed image. The electronic device displays the second processed image.

In some embodiments, compared with a conventional technology, the technical solutions of this application can implement real-time local adjustment to the image. When the slide speed of the user is slow, the electronic device determines that the intention of the user is to slowly adjust the image, and performs rendering processing on the image at the first resolution, so that the user accurately adjusts the image details, and controllability on local details is improved, thereby making an adjusted image better meet the requirement of the user, and improving user experience.

Optionally, after the electronic device processes the image at the first resolution, the electronic device displays an image processed at the first resolution.

It may be understood that, in the technical solutions of this application, when the image is processed at the first resolution, although a data amount is not reduced, and system performance is not optimized, real-time adjustment and observation of the image details are added. This improves the controllability of the user on the local details and improves user experience.

S604: The electronic device processes the image at a second resolution when the intention of the user is the second intention, where a first resolution is different from the second resolution.

In this embodiment of this application, the second resolution is a resolution less than the first resolution. The first resolution is a resolution that should be used when the electronic device processes the image when the intention of the user is the second intention.

In some embodiments, when the intention of the user is the second intention, the electronic device obtains a preset rule, and determines the second resolution based on the preset rule and the first resolution. The preset rule may be processing the first resolution based on a preset ratio to obtain the second resolution.

For example, the second resolution is the first resolution at the preset ratio, and the preset ratio is a value greater than 0 and less than 1. For example, if the preset ratio is 0.5, and the first resolution is 1920*1080, the second resolution is 960*540. For another example, if the preset ratio is 0.25, and the first resolution is 1024*768, the second resolution is 256*192.

In this embodiment of this application, when the intention of the user is the second intention, the electronic device determines, based on the foregoing mapping table, the second resolution corresponding to the second intention, and the electronic device processes the image at the second resolution.

It may be understood that, when the intention of the user is the second intention, the user desires to quickly adjust or view the overall image change effect. To meet this requirement of the user, the electronic device processes the image at a low resolution, so that a data amount during image processing can be reduced, and computing resources occupied during image processing can be reduced, thereby improving system performance, an image frame rate, and image processing efficiency. In addition, a response can be quickly made, the image change trend and image processing effect can be truly and smoothly displayed without stutter in the image processing procedure, so that viewing experience of the user is good.

In some embodiments, when the intention of the user is the second intention, the electronic device processes the image at a resolution (that is, the second resolution) less than a resolution of the image. For example, the electronic device currently displays an entire image that is not scaled up or scaled down, and the electronic device processes the entire image at the second resolution. For another example, the electronic device currently displays a scaled-up or scaled-down local image, and the electronic device processes, at the second resolution, an original image (namely, the entire image) that is not scaled up or scaled down, to obtain a third processed image. The electronic device processes the third processed image based on a status (for example, a scale-up ratio or a scale-down ratio) of the currently displayed image, to obtain a fourth processed image. The electronic device displays the fourth processed image.

In some embodiments, when the slide speed of the user is high, the electronic device determines that the intention of the user is to quickly adjust the image, and performs rendering processing on the image at the second resolution, so that the user views the image change effect in real time.

Optionally, after the electronic device processes the image at the second resolution, the electronic device displays an image processed at the second resolution.

For example, if it takes 160 ms for the electronic device to process an image whose resolution is 4000*4000, where 1 second=1000 ms, a frame rate in a conventional technology should be 1000/160=6.25 frames per second. In the technical solutions of this application, when it is determined that the intention of the user is to quickly adjust the image, the image is processed at a resolution less than 4000*4000 (for example, 1000*1000). If it takes 10 ms for the electronic device to process an image whose resolution is 1000*1000, a frame rate should be 1000/10=100 frames per second when the image is quickly adjusted in this application. That is, in the technical solutions of this application, when the image is processed at the low resolution, more image frames processed per second indicate a higher frame rate.

For example, Table 2 shows a frame rate (that is, a frame rate present before optimization) corresponding to a processing manner in the conventional technology and a frame rate (that is, a frame rate present after optimization) corresponding to a low-resolution processing manner used in this application that are present when the electronic device processes the high-resolution image.

**Table 2**

| Image type | Processing manner | Frame rate present before optimization | Frame rate present after optimization |
|---|---|---|---|
| 4K watercolor texture | Gaussian blur | 21 | 60 |
| | Motion blur | 31 | 67 |
| | Perspective blur | 35 | 70 |
| 4K standard texture | Gaussian blur | 30 | 76 |
| | Motion blur | 36 | 84 |
| | Perspective blur | 43 | 87 |

As shown in Table 2, frame rates corresponding to the low-resolution processing manner used in this application are all greater than frame rates corresponding to the processing manner in the conventional technology.

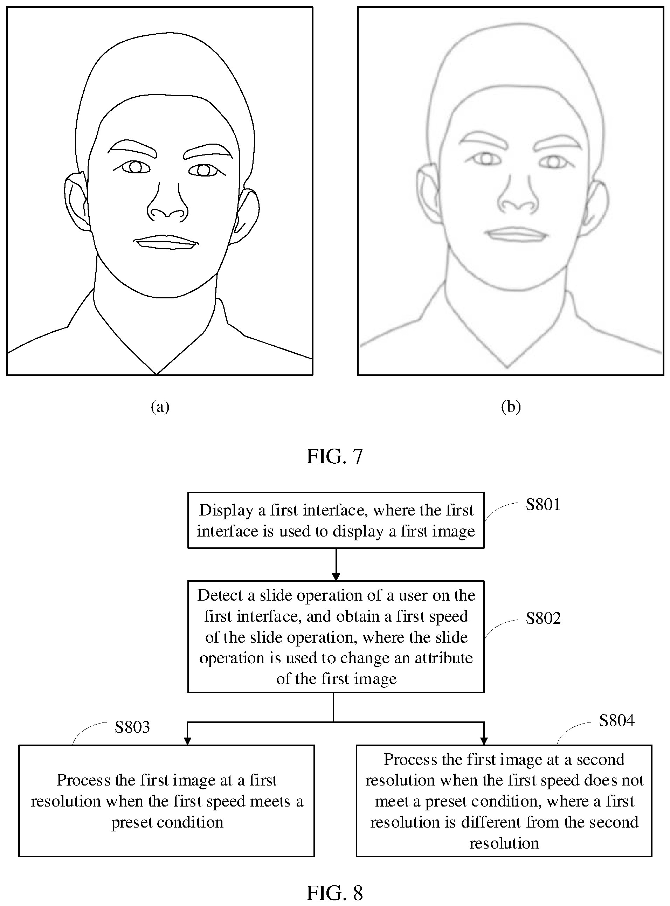

For example, a scaled-up high-resolution image is used as an example. (a) in FIG. 7 is a diagram of an interface on which the electronic device displays the image processed at the first resolution. (b) in FIG. 7 is a diagram of an interface on which the electronic device displays the image processed at the second resolution.

According to the foregoing technical solution, in this embodiment of this application, the electronic device determines the intention of the user based on a rate at which the user adjusts the image attribute, and determines, based on the intention of the user, a resolution that should be used in a subsequent image processing procedure. Specifically, when the user slowly slides, it is determined that the intention of the user is to make a slow adjustment, and the electronic device selects the resolution of the image to process the image, to implement fine-tuning of local details of the image, thereby improving controllability of the user on the image details, so that an adjusted image better meets the requirement of the user, and user experience is improved. When the user quickly slides, it is determined that the intention of the user is to make a quick adjustment, and the electronic device selects the resolution less than the resolution of the image to implement a factual adjustment on an overall image effect, so that the data amount is reduced, the system performance is optimized, an overall frame rate of the image and the processing effect are improved, thereby avoiding a problem, for example, stutter, unsmoothness, or asynchrony, of the image, and improving user experience.

It may be understood that, for a high-resolution image, in the conventional technology, an image processing effect is previewed first by reducing a resolution, but a resolution used during image processing is still a high resolution, and image details cannot be observed or adjusted. However, in this application, when determining, based on the slide speed, that the intention of the user is to slowly adjust the image, the electronic device processes the image and displays an image detail processing effect at the resolution of the image, thereby adding a function of controlling the image details. When determining, based on the slide speed, that the intention of the user is to quickly adjust the image, the electronic device processes the image at the resolution less than the resolution of the image, so that the data amount and a calculation amount can be reduced, thereby reducing a system load, improving the system performance, and optimizing the frame rate.

FIG. 8 is a schematic flowchart of another image processing method according to an embodiment of this application. The method is applied to an electronic device, and includes the following steps.

S801: The electronic device displays a first interface, where the first interface is used to display a first image.

In this embodiment of this application, the first interface is an interface that is in the electronic device and that displays the first image.

The first image may be an image shot by a user by using the electronic device, the first image may be an image drawn by the user on the electronic device, the first image may be an image obtained by the user via a network or by using an external storage device, the first image may be an image captured by the user when browsing a video, a document, or the like, or the first image may be an image stored in the electronic device.

The first image may be an image whose resolution is greater than or equal to a preset threshold, or the first image may be an image whose resolution is less than the preset threshold.

The first image may be an entire image that is not scaled up or scaled down, may be a scaled-up local image, or may be a scaled-down image.

S802: The electronic device detects a slide operation of the user on the first interface, and obtains a first speed of the slide operation, where the slide operation is used to change an attribute of the first image.

In this embodiment of this application, the electronic device detects a user operation, and obtains the first speed of the slide operation if the slide operation of the user for changing the attribute of the first image is detected.

In some examples, obtaining the first speed of the slide operation includes: determining the first speed based on a slide distance in a unit time; determining the first speed based on a quantity of pixels traversed in a unit time; or determining the first speed based on a slide distance and a slide time.

In some examples, the attribute of the first image includes contrast, brightness, saturation, hue, color balance, blurriness, sharpness, exposure, color temperature, highlight, and shadow.

It may be understood that, for a specific implementation of S802, refer to the foregoing descriptions of S601. Details are not described herein again.

S803: The electronic device processes the first image at a first resolution when the first speed meets a preset condition.

In this embodiment of this application, the preset condition includes a slide speed being less than a preset speed. The preset speed is a predetermined minimum threshold for the user to quickly adjust an image attribute. The first resolution is a resolution of the first image.

In some embodiments, when the first speed is less than the preset speed, the electronic device determines that the first speed meets the preset condition, and determines that an intention of the user is to quickly adjust the image attribute. In this case, the electronic device processes the first image at the first resolution.

It may be understood that, for a specific implementation of S803, refer to the foregoing descriptions of S602. Details are not described herein again.

S804: The electronic device processes the first image at a second resolution when the first speed does not meet a preset condition, where a first resolution is different from the second resolution.

In this embodiment of this application, the second resolution is less than the first resolution.

In some embodiments, when the first speed is greater than or equal to the preset speed, the electronic device determines that the first speed does not meet the preset condition, and determines that an intention of the user is to quickly adjust the image attribute. In this case, the electronic device processes the first image at the second resolution.

In some embodiments, when the first speed does not meet the preset condition, the electronic device obtains a preset rule, and determines the second resolution based on the preset rule and the first resolution. The preset rule may be processing the first resolution based on a preset ratio to obtain the second resolution, and the preset ratio is a value greater than 0 and less than 1.

It may be understood that, for a specific implementation of S804, refer to the foregoing descriptions of S603. Details are not described herein again.

In this way, when detecting that the user adjusts the image attribute, the electronic device selects, based on a slide speed of the user, different processing manners to process the image. When the user slowly slides, the image is processed at the first resolution, to display image details in real time, and enrich a detail display effect, thereby improving controllability of the user on the image details, and improving user experience. When the user quickly slides, the image is processed at the second resolution less than the first resolution, to truly, quickly, and smoothly display an image change effect, thereby reducing a data amount, improving an image frame rate and a processing effect without stutter, and improving user experience.

The foregoing mainly describes the solutions provided in embodiments of this application from a method perspective. To implement the foregoing functions, corresponding hardware structures and/or software modules for performing the functions are included. A person skilled in the art should be easily aware that, in combination with units and algorithm steps of the examples described in embodiments disclosed in this specification, this application may be implemented by hardware or a combination of hardware and computer software. Whether a specific function is performed by hardware or hardware driven by computer software depends on specific applications and design constraints of the technical solutions. A person skilled in the art may use different methods to implement the described functions for each specific application, but it should not be considered that the implementation goes beyond the scope of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, division into modules is an example, and is merely a logical functional division. During actual implementation, there may be another division manner.

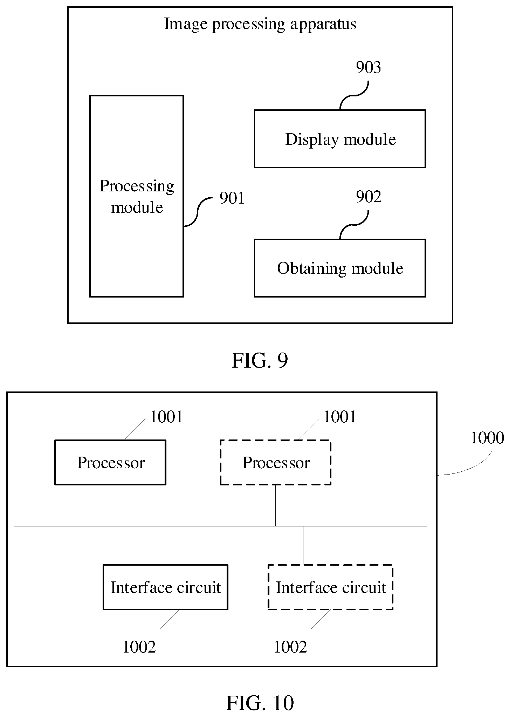

Based on a same inventive concept, an embodiment of this application provides an image processing apparatus. The image processing apparatus provided in this embodiment of this application is applied to an electronic device shown in FIG. 4. FIG. 9 is a diagram of a structure of an image processing apparatus according to an embodiment of this application. The image processing apparatus may be configured to implement the method described in each of the foregoing method embodiments. For example, the image processing apparatus may specifically include a processing module 901, an obtaining module 902, and a display module 903.

The processing module 901 is configured to perform a processing function that supports the image processing apparatus in performing any one of FIG. 6 to FIG. 8. In this embodiment of this application, an image processing module is configured to process a first image at a first resolution when a first speed meets a preset condition. The image processing module is further configured to process the first image at a second resolution when the first speed does not meet the preset condition. The first resolution is different from the second resolution.

The obtaining module 902 is configured to perform an obtaining function that supports the image processing apparatus in performing any one of FIG. 6 to FIG. 8. In this embodiment of this application, the obtaining module 902 is configured to: detect a slide operation of a user on a first interface, and obtain a first speed of the slide operation. The slide operation is used to change an attribute of the first image.

The display module 903 is configured to perform a display function that supports the image processing apparatus in performing any one of FIG. 6 to FIG. 8. In this embodiment of this application, the display module 903 is configured to display the first interface. The first interface is used to display the first image.

For a technical effect of the image processing apparatus shown in FIG. 9, refer to the technical effects of the methods in the foregoing method embodiments. Details are not described herein again. The processing module 901 in the image processing apparatus shown in FIG. 9 may be implemented by a processor or a processor-related circuit component, and may be a processor or a processing module. The display module 903 may be implemented by a display-related component.

An embodiment of this application further provides a chip system. As shown in FIG. 10, the chip system 1000 includes at least one processor 1001 and at least one interface circuit 1002. In an example, when the chip system 1000 includes one processor and one interface circuit, the processor may be a processor 1001 shown in a solid-line box (or a processor 1001 shown in a dashed-line box) in FIG. 10, and the interface circuit may be an interface circuit 1002 shown in a solid-line box (or an interface circuit 1002 shown in a dashed-line box) in FIG. 10. When the chip system 1000 includes two processors and two interface circuits, the two processors include the processor 1001 shown in the solid-line box and the processor 1001 shown in the dashed-line box in FIG. 10, and the two interface circuits include the interface circuit 1002 shown in the solid-line box and the interface circuit 1002 shown in the dashed-line box in FIG. 10. This is not limited.

The processor 1001 and the interface circuit 1002 may be interconnected through a line. For example, the interface circuit 1002 may be configured to receive a signal. For another example, the interface circuit 1002 may be configured to send a signal to another apparatus (for example, the processor 1001). For example, the interface circuit 1002 may read instructions stored in a memory, and send the instructions to the processor 1001. When the instructions are executed by the processor 1001, steps in the foregoing embodiments may be performed. Certainly, the chip system may further include another discrete component. This is not specifically limited in embodiments of this application.

Optionally, there may be one or more processors in the chip system. The processor may be implemented by hardware by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, the chip system may further include the memory (not shown in FIG. 10). Alternatively, there may be one or more memories. The memory may be integrated with the processor, or may be separated from the processor. This is not limited in this application. For example, the memory may be a non-transitory processor, for example, a read-only memory (read-only memory, ROM). The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed by a combination of hardware in the processor and a software module.

An embodiment of this application further provides a computer storage medium. The computer storage medium stores computer instructions. When the computer instructions are run on an electronic device, the electronic device is enabled to perform the method in the foregoing method embodiments.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

An embodiment of this application provides a computer program product. The computer program product includes a computer program or instructions. When the computer program or the instructions are run on a computer, the computer is enabled to perform the method in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the method in the foregoing method embodiments.

In addition, an embodiment of this application further provides a system. The system may be specifically a chip, a component, or a module. The system may include a processor and a memory that are connected to each other. The memory is configured to store computer-executable instructions. When the system runs, the processor may execute the computer-executable instructions stored in the memory, to enable the system to perform the method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only disk (compact disc read-only memory, CD-ROM), or any other form of storage medium well-known in the art. For example, the storage medium is coupled to a processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

Based on the foregoing descriptions of the implementations, a person skilled in the art may clearly understand that, for the purpose of convenient and brief description, division into the foregoing functional modules is merely used as an example for description. During actual application, the foregoing functions may be allocated to different functional modules for implementation as required. In other words, an internal structure of the apparatus is divided into different functional modules to implement all or a part of the functions described above. For a detailed working process of the foregoing system, apparatus, and unit, refer to a corresponding process in the foregoing method embodiments. Details are not described herein again.

In the several embodiments provided in this application, it should be understood that the disclosed apparatus and method may be implemented in other manners. When there is no conflict, embodiments may be combined with each other or mutually referenced. The described apparatus embodiments are merely examples. For example, division into modules or units is merely logical functional division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. Some or a part of the units may be selected according to an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or a part of the technical solutions may be implemented in a form of software product. The software product is stored in a storage medium and includes several instructions for instructing a device (which may be a single-chip microcomputer, a chip, or the like) or a processor (processor) to perform all or a part of the steps of the methods described in embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An image processing method, applied to an electronic device, wherein the method comprises:
displaying a first interface, wherein the first interface is used to display a first image;
detecting a slide operation of a user on the first interface, and obtaining a first speed of the slide operation, wherein the slide operation is used to change an attribute of the first image; and
processing the first image at a first resolution when the first speed meets a preset condition; or
processing the first image at a second resolution when the first speed does not meet a preset condition, wherein the first resolution is different from the second resolution.

2. The method according to claim 1, wherein the first resolution is a resolution of the first image, and the second resolution is less than the first resolution.

3. The method according to claim 1 or 2, wherein the preset condition comprises a slide speed being less than a preset speed, and the preset speed is a predetermined minimum threshold for the user to quickly adjust an image attribute; and processing the first image at the first resolution when the first speed meets the preset condition comprises:
when the first speed is less than the preset speed, determining that an intention of the user is to slowly adjust the image attribute, and processing the first image at the first resolution.

4. The method according to claim 1 or 2, wherein the preset condition comprises a slide speed being less than a preset speed, and the preset speed is a predetermined minimum threshold for the user to quickly adjust an image attribute; and processing the first image at the second resolution when the first speed does not meet the preset condition comprises:
when the first speed is greater than or equal to the preset speed, determining that an intention of the user is to quickly adjust the image attribute, and processing the first image at the second resolution.

5. The method according to any one of claims 1 to 4, wherein processing the first image at the second resolution when the first speed does not meet the preset condition comprises:
obtaining a preset rule when the first speed does not meet the preset condition;
determining the second resolution based on the preset rule and the first resolution; and
processing the first image at the second resolution.

6. The method according to claim 5, wherein the preset rule is to process the first resolution based on a preset ratio to obtain the second resolution, and the preset ratio is a value greater than 0 and less than 1.

7. The method according to any one of claims 1 to 6, wherein obtaining the first speed of the slide operation comprises:
determining the first speed based on a slide distance in a unit time;
or
determining the first speed based on a quantity of pixels traversed in the unit time;
or
determining the first speed based on a slide distance and a slide time.

8. The method according to any one of claims 1 to 7, wherein the attribute of the first image comprises: contrast, brightness, saturation, hue, color balance, blurriness, sharpness, exposure, color temperature, highlight, and shadow.

9. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 8.

10. A chip system, comprising at least one processor and at least one interface circuit, wherein the at least one interface circuit is configured to: perform a transceiver function, and send instructions to the at least one processor, the at least one processor executes the instructions, and the at least one processor performs the method according to any one of claims 1 to 8.

11. A computer-readable storage medium, wherein the computer-readable storage medium comprises a computer program or instructions, and when the computer program or the instructions are run on a computer, the computer is enabled to perform the method according to any one of claims 1 to 8.

12. A computer program product, wherein the computer program product comprises a computer program or instructions, and when the computer program or the instructions are run on a computer, the computer is enabled to perform the method according to any one of claims 1 to 8.
